(19) Europäisches Patentamt
European Patent Office
Office européen des brevets

(11) **EP 1 801 949 B1**

(12) **FASCICULE DE BREVET EUROPEEN**

(45) Date de publication et mention
de la délivrance du brevet:
**05.12.2018 Bulletin 2018/49**

(51) Int Cl.:
***H01M 10/60*** *(2014.01)* ***H02J 7/00*** *(2006.01)*

(21) Numéro de dépôt: **06291963.4**

(22) Date de dépôt: **18.12.2006**

(54) **Batterie, équipement électrique et procédé d'alimentation mettant en oeuvre un moyen de mise en court-circuit de la batterie**

Batterie, Elektrogerät und Versorgungsverfahren mit dem Einsatz eines Batteriekurzschlussmittels

Battery, electrical equipment and supply method implementing means of short-circuiting the battery

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **22.12.2005 FR 0513200**

(43) Date de publication de la demande:
**27.06.2007 Bulletin 2007/26**

(73) Titulaire: **Safran Electronics & Defense**
**92100 Boulogne-Billancourt (FR)**

(72) Inventeur: **Nollet, Michel**
**92100 Boulogne-Billancourt (FR)**

(74) Mandataire: **Lavialle, Bruno François Stéphane et al**
**Cabinet Boettcher**
**16, rue Médéric**
**75017 Paris (FR)**

(56) Documents cités:
**US-A1- 2005 064 278 US-B1- 6 340 879**
**US-B1- 6 392 388**

• **PATENT ABSTRACTS OF JAPAN vol. 2003, no. 12, 5 décembre 2003 (2003-12-05) -& JP 2004 063397 A (NISSAN MOTOR CO LTD), 26 février 2004 (2004-02-26)**

## Description

La présente invention concerne une batterie, telle qu'une batterie Li-Ion, un équipement électrique alimenté par batterie et un procédé d'alimentation électrique par batterie utilisables notamment dans le domaine des appareils électriques portatifs.

## ARRIERE PLAN DE L'INVENTION

Il est connu qu'une batterie a une résistance interne d'autant plus importante que sa température est basse. Cette augmentation de la résistance interne diminue les performances de la batterie au point que la batterie ne puisse plus alimenter suffisamment l'équipement auquel elle est reliée.

Pour remédier à cet inconvénient, on a imaginé d'associer à la batterie un dispositif externe de chauffage par exemple comportant des produits réactifs dont l'association engendrerait une réaction exothermique au voisinage de la batterie. Un tel dispositif serait cependant relativement lourd et supposerait, d'une part, de disposer de produits réactifs en quantité suffisante pour réchauffer la batterie et, d'autre part, de renouveler ceux-ci lorsqu'ils sont épuisés. Il en résulterait des contraintes logistiques rédhibitoires pour certaines applications, notamment dans des lieux difficiles d'accès.

On a également imaginé d'entourer le boîtier de la batterie avec une résistance, et de faire débiter la batterie dans la résistance pour chauffer la batterie. L'ensemble batterie et résistance devrait alors être isolé thermiquement pour obtenir un chauffage efficace. Ceci augmenterait toutefois le volume et le poids de la batterie et s'avèrerait relativement coûteux tout en ayant un rendement relativement faible, et la montée en température du coeur des éléments serait lente. JP2004063397 montre une batterie comprenant un interrupteur de court circuit qui est fermé quand un senseur de température détecte une température de la batterie inférieure à une référence. US6340879 montre un circuit de revitalisation pour une batterie. Le circuit agence un interrupteur de court circuit aux bornes de la batterie avec un rapport cyclique qui dépend de la température de la batterie.

## OBJET DE L'INVENTION

Il serait donc intéressant de disposer d'un moyen pour améliorer les performances d'une batterie à basse température.

## RESUME DE L'INVENTION

L'invention se réfère à un procédé suivant la revendication 1, un équipement électrique suivant la revendication 3 et une batterie suivant la revendication 9. A cet effet, on prévoit, selon l'invention, un procédé d'alimentation électrique au moyen d'une batterie comportant l'étape de mettre en court-circuit la batterie jusqu'à ce qu'elle présente une température supérieure à un seuil prédéterminé, la batterie étant mise en court-circuit selon un rapport cyclique temporel déterminé pour maintenir l'équipement en fonctionnement permanent et maintenir la température de la batterie au-dessus du seuil prédéterminé.

La mise en court-circuit de la batterie provoque une brusque élévation de température au sein même de celle-ci. Le chauffage procuré est particulièrement efficace, puisqu'il intervient au coeur de la batterie, et n'entraîne qu'une consommation d'énergie relativement limitée et permet à la batterie de continuer à alimenter l'équipement.

L'invention a également pour objet une batterie comprenant un organe de mise en court-circuit agencé pour être commandable selon un rapport cylindrique temporel entre un état de fonctionnement normal de la batterie et un état de court-circuit dans lequel la batterie est en court-circuit, l'organe de mise en court-circuit étant relié à un détecteur de température de la batterie pour passer de l'état de court-circuit à l'état de fonctionnement normal pour une température de la batterie supérieure à un seuil prédéterminé.

Ainsi, la batterie incorpore des moyens de chauffage sous la forme des moyens de sa mise en court-circuit et des moyens de contention provisoire d'énergie apte à alimenter un équipement électrique connecté à le batterie lorsque l'organe de mise en court circuit est dans l'état de court circuit.

L'invention a en outre pour objet un équipement électrique comprenant un circuit d'alimentation comportant des éléments de raccordement à des bornes d'au moins une batterie et un organe de commutation disposé entre les éléments de raccordement et agencé pour être commandable selon un rapport cyclique temporel entre un état de court-circuit dans lequel il connecte les éléments de raccordement l'un à l'autre et un état de déconnexion dans lequel il déconnecte les éléments de raccordement l'un de l'autre, l'organe de commutation étant relié à un détecteur de température de la batterie pour passer de l'état de court-circuit à l'état de déconnexion pour une température de la batterie supérieure à un seuil prédéterminé.

L'équipement incorpore alors les moyens permettant de mettre la batterie en court-circuit pour réchauffer celle-ci.

D'autres caractéristiques et avantages de l'invention ressortiront à la lecture de la description qui suit d'un mode de réalisation particulier non limitatif de l'invention.

BREVE DESCRIPTION DES DESSINS

Il sera fait référence aux dessins annexés, parmi lesquels :

- la figure 1 est une vue schématique d'une batterie suivant un exemple utile pour comprendre l'invention
- la figure 2 est une vue schématique partielle d'une variante de réalisation de cette batterie,
- la figure 3 est une vue schématique d'un équipement électrique conforme à l'invention,
- les figures 4 et 5 sont des vues schématiques d'une batterie conforme à deux modes de réalisation de l'invention.

DESCRIPTION DETAILLEE DE L'INVENTION

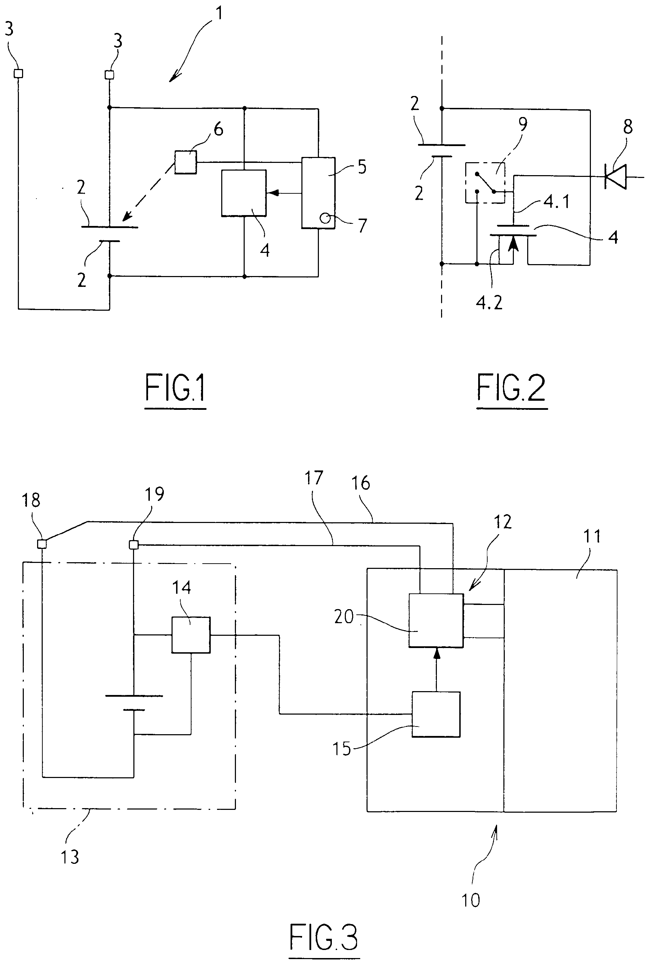

En référence à la figure 1, la batterie généralement désignée en 1, est ici une batterie Li-Ion qui comprend, de façon connue en elle-même, une série d'électrodes 2 (deux électrodes seulement sont symbolisées sur la figure 1), séparées par un électrolyte et reliées à des bornes 3 de connexion externe de la batterie 1. La batterie 1 comporte un organe de mise en court-circuit 4 relié aux électrodes 2 et à un circuit de commande 5 lui-même relié à un détecteur de température 6 de la batterie 1.

L'organe de mise en court-circuit 4 est par exemple un transistor de type MOSFET possédant un état de fonctionnement normal de la batterie 1 dans lequel l'organe de mise en circuit 4 maintient les électrodes 2 déconnectées l'une de l'autre et un état de court-circuit dans lequel l'organe de mise en court-circuit 4 relie les électrodes 2 l'une à l'autre pour mettre la batterie 1 en court-circuit.

Le détecteur de température 6 est ici une thermistance.

Le circuit de commande 5 est agencé pour commander l'organe de mise en court-circuit 4 pour passer de l'état de court-circuit à l'état de fonctionnement normal lorsque la température de la batterie 1 captée par le détecteur de température 6 est supérieure à un seuil prédéterminé. Ce seuil est déterminé pour que la température atteinte par la batterie 1 en court-circuit ne risque pas d'entraîner une détérioration de la batterie 1. Le circuit de commande 5 comprend un organe 7 lui permettant d'être alimenté en électricité pendant que la batterie 1 est en court-circuit. L'organe 7 est ici une batterie additionnelle non rechargeable.

La mise en court-circuit de la batterie 1 peut par exemple être commandée automatiquement par le circuit de commande 5 lorsque la température captée par le détecteur de température 6 est inférieure au seuil prédéterminé ou, par exemple, au moyen d'un commutateur disposé sur le boîtier de la batterie 1 et accessible à l'opérateur pour que celui-ci puisse, en fonction de la température ambiante, commander lui-même le réchauffage de la batterie 1.

La mise en court-circuit de la batterie peut être réalisée avant ou après la connexion de la batterie à l'équipement qu'elle est destinée à alimenter.

Dans la variante de la figure 2, le circuit de commande (non visible) est analogue à celui précédemment décrit, de même que l'organe de mise en court-circuit 4 qui est un transistor de type MOSFET à la grille 4.1 duquel le circuit de commande 5 est relié par une diode 8 pour commander le passage de l'organe de mise en court-circuit 4 de son état de fonctionnement normal à son état de mise en court-circuit.

Le détecteur de température 9 est un thermo-contact (ou thermostat) relié à la grille 4.1 et à la source 4.2 de l'organe de mise en court-circuit 4 agencé pour court-circuiter la jonction grille source lorsque la température interne de la batterie 1 dépasse le seuil prédéterminé. Quand le détecteur de température 9 court-circuite la grille 4.1 et la source 4.2 de l'organe de mise en court-circuit 4, celui-ci revient alors dans son état de fonctionnement normal. Lorsque la température interne redescend sous le seuil prédéterminé, le détecteur de température 9 coupe la liaison précédemment établie entre la grille et la source.

Dans cette variante, il n'est pas nécessaire que le circuit de commande 5 dispose d'un organe d'alimentation 7 dédié pour l'alimenter lorsque la batterie 1 est en court-circuit. On notera en outre que le détecteur de température 9 empêche une mise en court-circuit accidentelle de la batterie 1 si la température interne de celle-ci est supérieure au seuil prédéterminé.

En référence à la figure 3, l'équipement conforme à l'invention, généralement désigné en 10, comprend une unité électrique 11 reliée par un circuit d'alimentation 12 à une batterie 13.

La batterie 13 est ici une batterie Li-Ion de type SMART, c'est-à-dire répondant aux spécifications du standard industriel SBS (de l'anglais "Smart Battery Systems", systèmes de batterie intelligente) incorporant un processeur 14 susceptible de fournir des informations relatives à diverses caractéristiques de la batterie et notamment à son niveau de charge et à sa température interne.

Le circuit d'alimentation 12 comporte lui-même un processeur schématisé en 15 relié au processeur 14 par des moyens de raccordement connus en eux-mêmes et non représentés sur la figure 2, de telle manière que le processeur 14 puisse transmettre au processeur 15 un signal représentatif de la température interne de la batterie 1. Le circuit d'alimentation 12 comprend en outre des conducteurs 16, 17 reliés à des bornes 18, 19 de la batterie 13. Entre les conducteurs 16, 17 est disposé un organe de commutation 20 actionnable entre un état de court-circuit dans lequel il connecte l'un à l'autre les conducteurs 16, 17 et un état de déconnexion dans lequel il déconnecte les conducteurs 16, 17 l'un de l'autre. Le circuit d'alimentation comprend une batterie non rechargeable, non représentée sur la figure, pour l'alimenter lorsque la batterie est en court-circuit.

Le processeur 15 du circuit d'alimentation 12 est relié à l'organe de commutation 20 pour commander l'organe de commutation 20 pour passer de l'état de court-circuit à l'état de déconnexion lorsque la température est supérieure à un seuil prédéterminé. La mise en court-circuit de la batterie 1 peut par exemple être commandée automatiquement par le processeur 15 lorsque le signal de température transmis par le processeur 14 est inférieure au seuil prédéterminé ou, par exemple, au moyen d'un commutateur disposé sur le boîtier de la batterie 1 et accessible à l'opérateur pour que celui-ci puisse, en fonction de la température ambiante, commander lui-même le réchauffage de la batterie 1.

Bien entendu, l'invention n'est pas limitée au mode de réalisation décrit et on peut y apporter des variantes de réalisation sans sortir du cadre de l'invention tel que défini par les revendications.

En particulier, la mise en court-circuit peut être réalisée au moyen d'un circuit dédié relié à la batterie et à l'équipement à alimenter.

L'organe de mise en court-circuit 1 peut comprendre un élément de sécurité passif, tel qu'un thermo-fusible ou un thermo-contact, supprimant le court-circuit de la batterie dès que la température dépasse le seuil prédéterminé en cas de défaillance du circuit de commande. L'organe de mise en court-circuit peut être différent de celui décrit et par exemple tout type de commutateur de puissance commandable à l'allumage comme à l'extinction (transistor bipolaire, IGBT, thyristor extinguible).

En outre, l'organe 7 permettant l'alimentation du circuit de commande 5 lorsque la batterie est en court-circuit (premier mode de réalisation) peut être une batterie additionnelle rechargeable reliée aux électrodes 2 pour être rechargée par la batterie 1. La batterie additionnelle est alors reliée aux électrodes 2 par une diode de telle manière que, lorsque la batterie 1 est en court-circuit, la diode soit bloquée évitant ainsi que la batterie additionnelle soit court-circuitée et que, lorsque la batterie 1 n'est pas en court-circuit, la diode soit passante permettant que la batterie 1 recharge la batterie additionnelle.

L'organe 7 peut également être un condensateur dimensionné pour alimenter le circuit de commande 5 lorsque la batterie 1 est en court-circuit. Si le condensateur est sous-dimensionné et ne suffit pas pour alimenter le circuit pendant toute la durée du court-circuit, il est possible de prévoir des mises en court-circuit successives de telle manière que le condensateur puisse se recharger entre les mises en court-circuit. Dans ce cas, les mises en court-circuit et ouverture peuvent se succéder à une fréquence pouvant être relativement lente (très inférieure au hertz) jusqu'à rapide (quelques Mégahertz) dans le but de réduire au minimum la valeur du condensateur additionnel (la fréquence n'étant limitée que par la performance des composants de puissance employés).

Il est en outre possible de réchauffer la batterie ou de maintenir la température de la batterie pendant l'utilisation normale de l'équipement alimenté. En effet, par grand froid, il existe un risque que la dissipation d'énergie dans la batterie (égale au produit de la résistance interne de la batterie par le carré du courant consommé par l'équipement) soit trop faible pour maintenir la température de la batterie. Dans ce cas, la chute de tension (qui est égale au produit de la résistance interne et du courant consommé) devient trop forte pour autoriser le fonctionnement de l'équipement. Un réchauffage de la batterie devient donc nécessaire, mais une mise en court circuit de la batterie oblige à interrompre le fonctionnement de l'équipement si l'on ne dispose pas d'une autre source d'énergie. Dans cette variante, le court-circuit est appliqué avec un rapport cyclique temporel, ici de fréquence relativement élevée. Une diode de puissance est alors prévue entre la batterie et l'équipement pour permettre au condensateur d'entrée de l'équipement de conserver la tension de la batterie pendant la durée du court-circuit périodique.

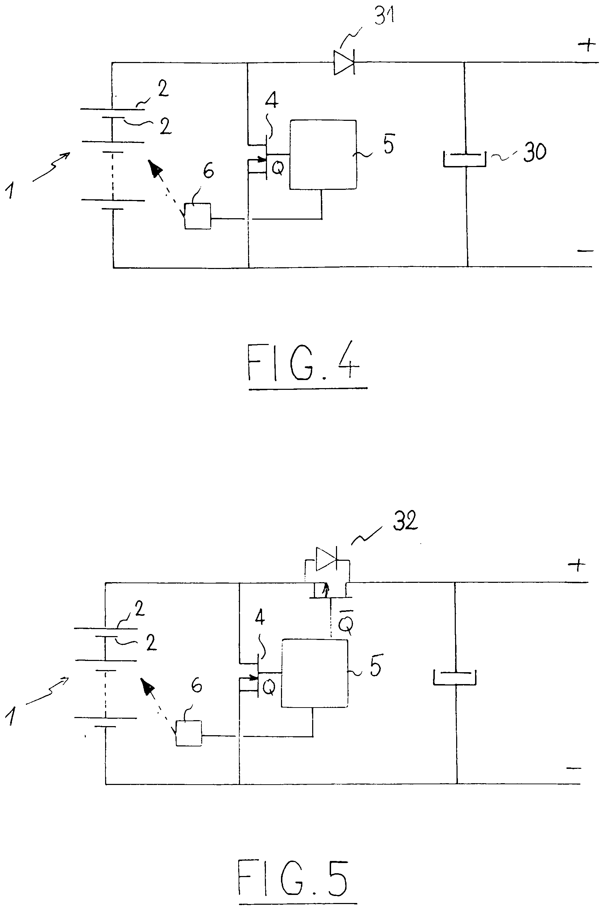

A la figure 4 est représenté un circuit conforme l'invention. Ce circuit relie les électrodes 2 d'une batterie 1 à un équipement non représenté. Un organe de mise en court-circuit 4 sous forme d'un transistor de type MOSFET est relié aux électrodes 2 et à un circuit de commande 5 lui-même relié à un détecteur de température 6 de la batterie 1. Entre les électrodes 2 est également monté le condensateur 30 d'entrée de l'équipement et une diode de puissance 31 est montée entre la batterie 1 et le condensateur 30.

Le circuit de commande 5 compare la température mesurée par le capteur 6 et un seuil de température à partir duquel le réchauffage de la batterie n'est pas nécessaire, et élabore un signal $Q$ qui rend conducteur l'organe de mise en court-circuit 4 avec un rapport cyclique dépendant de la différence entre la température mesurée et la température de consigne (égale au seuil).

Lorsque la température de consigne est atteinte, le rapport cyclique est égal à 0 tandis que, lorsque la température mesurée est très inférieure à la température de consigne, le rapport cyclique est égal à 1. La capacité du condensateur 31 est déterminée de telle manière que la tension à ses bornes a peu le temps de chuter pendant la mise en court-circuit de la batterie.

La diode de puissance peut être avantageusement remplacé par un transistor MOSFET commandé selon la méthode dite du redressement synchrone de façon à s'affranchir de la tension de déchet de la diode et donc à améliorer le rendement. Ce mode de réalisation est représenté sur la figure 5 où la diode 31 du mode de réalisation précédent a été remplacée par un transistor 32 de type MOFSET relié au circuit de commande 5 pour être piloté par celui-ci. On notera que le transistor 32 est positionné de telle manière que sa diode interne soit orientée comme la diode 32 du mode de réalisation précédent, c'est-à-dire passante dans le sens de l'alimentation de l'équipement par la batterie 1.

Le fonctionnement est le même que pour le mode de réalisation précédent. La diode interne du transistor 32 est court-circuitable par l'effet de champ de manière à économiser la tension de déchet de la diode.

Le circuit de commande 5 a deux sorties $Q$ et $\overline{Q}$ de sorte que lorsque l'organe de mise en court-circuit 4 est conducteur, le transistor 32 est bloqué et réciproquement.

La détermination du rapport cyclique va maintenant être détaillée.

Pour que l'équipement fonctionne, il faut que :

$$FEM - V_{\min.eq} > R_B \ x \ I_{eq} \quad \text{soit} \quad R_B < \frac{FEM - V_{\min.eq}}{I_{eq}} \ (1)$$

où

FEM est la tension à vide de la batterie,

$R_B$ est la résistance interne de la batterie à l'état réchauffé,

$V_{min.eq}$ est la tension minimum de fonctionnement de l'équipement,

$T_{eq}$ est le courant consommé par l'équipement.

Or, la résistance interne de la batterie dépend de :

- la construction de la batterie,
- l'usage qui a été fait de la batterie (la résistance interne augmente avec le nombre de cycles charge-décharge qu'elle a subi),
- la température (plus la température est élevée, plus la résistance baisse).

Lorsque la résistance interne de la batterie est trop élevée, l'équipement ne peut être alimenté. On augmente alors la température de la batterie jusqu'à une température où la résistance interne de la batterie a suffisamment baissé pour permettre l'alimentation de l'équipement.

La condition de fonctionnement devient alors :

$$P_B > \frac{\Delta t}{R_{thB}} \ (2)$$

où $P_B$ est la puissance dissipée dans la batterie, soit $R_B \ x \ I_{eq}{}^2$, $\Delta t$ est l'écart entre la température initiale de la batterie et la température permettant l'alimentation de l'équipement,

$R_{thB}$ est la résistance thermique de la batterie à la température ambiante (grandeur totalisant les déperditions thermiques de la batterie en °C/W).

Pour maintenir cette condition de fonctionnement, on met la batterie en court-circuit selon un rapport cyclique

$\tau \ = \ \dfrac{T_{cc}}{T}$ où T est la période et $T_{cc}$ la durée du court-circuit au cours de chaque période.

Pendant $T_{cc}$, la batterie ne fournit pas de courant, pendant $T-T_{cc}$ la batterie fournit le courant $I_{eq}$.

$$\text{La condition (2) s'écrit alors } P_m > \frac{\Delta t}{R_{thB}} \ (3)$$

où : $P_m$ est la puissance moyenne dissipée dans la batterie pendant le court-circuit et pendant l'alimentation de l'équipement soit $Pm = \tau \ x \ P_{cc} + (1 - \tau) \ _{Pleq}$ (4) avec

$$P_{cc} = \frac{FEM^2}{R_B} \quad \text{et} \quad P_{Ieq} = R_B \times I_{eq}^2.$$

Le rapport cyclique est donc tel que :

$$\tau \times P_{cc} + (1 - \tau) \, P_{Ieq} = \frac{\Delta t}{R_{thB}} \quad (5)$$

A titre d'exemple, on considère un équipement et une batterie ayant les caractéristiques suivantes : $V_{min.eq}$ = 3 V ; $I_{eq}$ = 1 A ; FEM= 3,7 V ; $R_B$ = 0,5 $\Omega$ ; $R_{thB}$ = 10°C/w. L'équipement fonctionne lorsque la température de la batterie est au moins voisine de la température correspondant à l'état réchauffé. Quand il fait froid (prenons ici 20°C sous la température correspondant à l'état réchauffé, soit $\Delta t$ = 20), la batterie a besoin d'une dissipation interne de 2 watts pour se maintenir à l'état réchauffé ($\Delta t / R_{thB}$). Or la consommation de l'équipement n'induit dans la batterie qu'une dissipation de 0,5 watts ($P_B$ = $P_{Ieq}$ = $R_B$ x $I_{eq}^2$). La batterie va donc se refroidir et sa résistance interne augmenter. L'équipement s'arrêtera quand la tension sera descendue en dessous de 3 volts. On pourrait attendre l'arrêt de l'équipement pour mettre la batterie en court-circuit, la puissance dégagée à l'intérieur de la batterie serait alors de 26 watts, soit treize fois plus qu'il n'en faut pour maintenir la batterie en température. On peut donc également appliquer le court-circuit selon un rapport cyclique de 1/13ème (soit 7,7 %) pour dissiper 2 watts à l'intérieur de la batterie et maintenir l'équipement en fonctionnement permanent (pour simplifier, la dissipation thermique provoquée par le courant consommé par l'équipement n'est pas prise en compte, le rapport cyclique de court-circuit étant en fait légèrement inférieur à 1/13ème). La batterie sera court-cicuitée 1/13ème du temps et alimentera l'équipement 12/13ème du temps. Pour une fréquence de découpage de l'ordre de 300 KiloHertz, la période sera de 3,3 microsecondes et le temps de non alimentation de l'équipement sera de 0,26 microsecondes. Un condensateur de valeur relativement modeste peut alimenter l'équipement pendant cette durée et se recharger pendant les 12/13ème de temps restant. Plus précisément, en tenant compte de la dissipation thermique évoquée ci-dessus et en appliquant pour ce faire la formule (5), on obtient un rapport cyclique de 5,6 %. Il suffit donc d'appliquer le court-circuit avec ce rapport pour que la batterie soit capable d'alimenter l'équipement.
Il est possible de commander le ou les commutateurs de puissance par un circuit de commande par asservissement à une valeur de consigne représentative du seuil de température. Est notamment utilisable un circuit intégré à modulation de largeur d'impulsion (PWM de l'anglais "Pulse Width Modulation") comprenant classiquement une référence de tension, un amplificateur opérationnel, un générateur de dents de scie, un comparateur du signal d'erreur de l'ampli opérationnel avec la tension en dents de scie. La sortie de ce comparateur est la commande de mise en conduction du transistor de court-circuit. En convertissant la température de la batterie (mesurée par exemple au moyen d'une thermistance ou d'un thermocouple) en une tension, le circuit à modulation de largeur de bande peut ajuster le rapport cyclique de court-circuit de façon à obtenir toujours la température de batterie souhaitée. Ce circuit, grâce à sa boucle d'asservissement à grand gain, commandera le court-circuit permanent tant que la température de batterie n'aura pas atteint la valeur de consigne fixée à l'asservissement. Lorsque l'équipement sera mis en service à froid, le dispositif décrit ci-dessus établira de lui-même un court-circuit permanent sans alimenter l'équipement et passera au rapport cyclique correspondant à l'équilibre thermique pour faire apparaître la tension d'alimentation de l'équipement. Le circuit à modulation de largeur de bande peut être remplacé par tout autre circuit de commande et notamment un circuit de commande à commutation dite "douce", ou à quasi-résonance, ou à résonance, à variation de phase ou de fréquence, ou à combinaison d'une variation de phase, de fréquence et de rapport cyclique. Les circuits de commande peuvent être analogiques ou numériques. La diode de puissance et le condensateur utilisés ci-dessus peuvent être remplacés par un autre moyen de contention provisoire d'énergie comme une self associée à un commutateur de puissance. Il est d'ailleurs possible d'utiliser la self de puissance généralement présente dans le convertisseur ou le régulateur de puissance de l'équipement lorsque celui-ci en comporte un.
Lorsque la batterie 1 comporte plusieurs éléments séparés ou accumulateurs en série ou en parallèle, le circuit de commande et de mise en court-circuit peut être agencé pour mettre en court-circuit certains de ces éléments et s'alimenter sur un ou plusieurs des autres éléments.
Dans le cas d'un équipement comprenant au moins deux batteries auxquelles est relié un appareil comportant un circuit d'alimentation, le circuit d'alimentation peut être alimenté par une des batteries (compte tenu de sa faible consommation) tandis qu'il met l'autre en court-circuit. Une fois cette dernière batterie réchauffée, le circuit d'alimentation raccorde à celle-ci les composants fortement consommateurs d'électricité.

**Revendications**

1. Procédé d'alimentation électrique d'un équipement au moyen d'une batterie (1, 13), comportant l'étape de mettre en court-circuit la batterie jusqu'à ce qu'elle présente une température supérieure à un seuil prédéterminé, **caractérisé en ce que** la batterie est mise en court-circuit selon un rapport cyclique temporel déterminé pour maintenir l'équipement en fonctionnement permanent et maintenir la température de la batterie au-dessus du seuil prédéterminé.

2. Procédé selon la revendication 1, dans lequel le rapport cyclique $\tau$ est tel que :

$$\tau \times P_{CC} + (1 - \tau) \, P_{Ieq} = \Delta t / R_{thB}$$

où $\tau$ est le rapport cyclique, $P_{CC}$ est la puissance dissipée dans la batterie en court-circuit, $P_{Ieq}$ est la puissance dissipée dans la batterie pendant l'alimentation de l'équipement, $\Delta t$ est l'élévation de température à appliquer à la batterie pour permettre l'alimentation de l'équipement et $R_{thB}$ est la résistance thermique de la batterie.

3. Equipement électrique (10) comprenant un circuit d'alimentation (12) comportant des éléments de raccordement (16, 17) à des bornes (18, 19) d'au moins une batterie (13) et un organe de commutation (20) disposé entre les éléments de raccordement et agencé pour être commandable selon un rapport cyclique temporel entre un état de court-circuit dans lequel il connecte les éléments de raccordement l'un à l'autre et un état de déconnexion dans lequel il déconnecte les éléments de raccordement l'un de l'autre, l'organe de commutation étant relié à un détecteur de température (14) de la batterie pour passer de l'état de court-circuit à l'état de déconnexion pour une température de la batterie supérieure à un seuil prédéterminé, **caractérisé en ce que** le circuit d'alimentation est adapté pour la mise en oeuvre de la méthode de la revendication 1

4. Equipement électrique selon la revendication 3, dans lequel le circuit d'alimentation comprend un condensateur d'entrée de l'équipement.

5. Equipement électrique selon la revendication 4, dans lequel une diode de puissance est montée entre la batterie et le condensateur d'entrée.

6. Equipement électrique selon la revendication 4, dans lequel un transistor MOSFET est monté entre la batterie et le condensateur d'entrée et est commandé en redressement synchrone pour former l'organe de commutation.

7. Equipement électrique selon la revendication 3, dans lequel l'organe de commutation est relié à un circuit de commande par asservissement à une valeur de consigne représentative du seuil de température.

8. Equipement électrique selon la revendication 7, dans lequel le circuit de commande est un circuit à modulation de largeur d'impulsions ayant une sortie formant une commande de mise en conduction de l'organe de commutation.

9. Batterie (1) pour la mise en oeuvre du procédé de la revendication 1 comprenant un organe de mise en court-circuit (4) agencé pour être commandable selon un rapport cyclique temporel entre un état de fonctionnement normal de la batterie et un état de court-circuit dans lequel la batterie est en court-circuit, l'organe de mise en court-circuit étant relié à un détecteur de température de la batterie pour passer de l'état de court-circuit à l'état de fonctionnement normal pour une température de la batterie supérieure à un seuil prédéterminé, **caractérisé en ce que** la batterie comprend un moyen de contention provisoire d'énergie apte à alimenter un équipement électrique connecté à la batterie lorsque l'organe de mise en court-circuit est dans l'état de court-circuit.

**Patentansprüche**

1. Verfahren zur elektrischen Versorgung eines Geräts mittels einer Batterie (1, 13), umfassend den Schritt des Kurzschließens der Batterie, bis sie eine Temperatur aufweist, die höher als ein vorgegebener Schwellenwert ist, **dadurch gekennzeichnet, dass** die Batterie gemäß einem bestimmten zeitlichen Tastverhältnis kurzgeschlossen wird, um das Gerät im Dauerbetrieb zu halten und die Temperatur der Batterie über dem vorgegebenen Schwellenwert zu halten.

**2.** Verfahren nach Anspruch 1, bei dem das Tastverhältnis $\tau$ derart ist:

$$\tau \times P_{cc} + (1 - \tau)\, P_{Ieq} = \Delta t / R_{thB}$$

wobei $\tau$ das Tastverhältnis ist, $P_{CC}$ die Verlustleistung in der Batterie bei Kurzschluss ist, $P_{Ieq}$ die Verlustleistung in der Batterie bei Versorgung des Geräts ist, $\Delta t$ die Temperaturerhöhung ist, die an der Batterie durchgeführt werden muss, um die Versorgung des Geräts zu ermöglichen, und $R_{thB}$ der Wärmewiderstand der Batterie ist.

**3.** Elektrisches Gerät (10), umfassend einen Versorgungskreis (12), der Verbindungselemente (16, 17) zur Verbindung mit Anschlussklemmen (18, 19) mindestens einer Batterie (13) umfasst, und ein Schaltelement (20), das zwischen den Verbindungselementen angeordnet und so ausgebildet ist, dass es gemäß einem zeitlichen Tastverhältnis zwischen einem Kurzschlusszustand, in dem es die Verbindungselemente miteinander verbindet, und einem Trennungszustand, in dem es die Verbindungselemente voneinander trennt, steuerbar ist, wobei das Schaltelement mit einem Temperaturdetektor (14) zur Temperaturerfassung der Batterie verbunden ist, um von dem Kurzschlusszustand in den Trennungszustand bei einer Temperatur der Batterie überzugehen, die höher als ein vorgegebener Schwellenwert ist, **dadurch gekennzeichnet, dass** das Versorgungskreis ist zum Durchführen des Verfahrens nach Anspruch 1 geeignet.

**4.** Elektrisches Gerät nach Anspruch 3, bei dem der Versorgungskreis einen Eingangskondensator des Geräts umfasst.

**5.** Elektrisches Gerät nach Anspruch 4, bei dem eine Leistungsdiode zwischen der Batterie und dem Eingangskondensator geschaltet ist.

**6.** Elektrisches Gerät nach Anspruch 4, bei dem ein MOSFET-Transistor zwischen der Batterie und dem Eingangskondensator geschaltet ist und mit Synchrongleichrichtung gesteuert wird, um das Schaltelement zu bilden.

**7.** Elektrisches Gerät nach Anspruch 3, bei dem das Schaltelement mit einem Regelkreis zur Regelung auf einen Sollwert verbunden ist, der repräsentativ für den Temperaturschwellenwert ist.

**8.** Elektrisches Gerät nach Anspruch 7, bei dem der Regelkreis ein Kreis mit Pulsbreitenmodulation ist, der einen Ausgang hat, der einen Durchschaltbefehl für das Schaltelement bildet.

**9.** Batterie (9) zum Durchführen des Verfahrens nach Anspruch 1, umfassend ein Kurzschlusselement (4), das so ausgebildet ist, dass es gemäß einem zeitlichen Tastverhältnis zwischen einem normalen Betriebszustand der Batterie und einem Kurzschlusszustand, in dem die Batterie kurzgeschlossen ist, steuerbar ist, wobei das Kurzschließelement mit einem Temperaturdetektor zur Temperaturerfassung der Batterie verbunden ist, um von dem Kurzschlusszustand in den normalen Betriebszustand bei einer Temperatur der Batterie überzugehen, die höher als ein vorgegebener Schwellenwert ist, **dadurch gekennzeichnet, dass** die Batterie ein Mittel zum vorläufigen Halten von Energie umfasst, das geeignet ist, ein elektrisches Gerät, das an die Batterie angeschlossen ist, zu versorgen, wenn das Kurzschließelement in dem Kurzschlusszustand ist.

**Claims**

**1.** Method of supplying electricity to a piece of equipment by means of a battery (1, 13), comprising the step of short-circuiting the battery until it is at a temperature higher than a predetermined threshold, **characterised in that** the battery is short-circuited in a time-based cycle whose ratio is so determined as to keep the piece of equipment in operation at all times and to hold the temperature of the battery above the predetermined threshold.

**2.** Method according to claim 1, wherein the ratio $\tau$ of the cycle is such that:

$$\tau \times P_{CC} + (1 - \tau)\, P_{Ieq} = \Delta t / R_{thB}$$

where $\tau$ is the ratio of the cycle, $P_{CC}$ is the power dissipated in the battery when short-circuited, $P_{Ieq}$ is the power dissipated in the battery while the piece of equipment is being supplied, $\Delta t$ is the rise in temperature to be applied to the battery to enable the piece of equipment to be supplied and $R_{thB}$ is the thermal resistance of the battery.

3. Piece of electrical equipment (10), comprising a supply circuit (12) comprising members (16, 17) for making connections to terminals (18, 19) of at least one battery (13) and a switching member (20) arranged between the members for making connections and adapted to be drivable in a ratio of a time-based cycle between a short-circuiting state in which it connects the members for making connections together and a disconnecting state in which it disconnects the members for making connections from one another, the switching member being connected to a detector (14) which detects the temperature of the battery for the purpose of a change from the short-circuiting state to the disconnecting state when the temperature of the battery is higher than a predetermined threshold, **characterised in that** the supply circuit is adapted to carry out the method of claim 1.

4. Piece of electrical equipment according to claim 3, wherein the supply circuit comprises an input capacitor of the piece of equipment.

5. Piece of electrical equipment according to claim 4, wherein a power diode is mounted between the battery and the input capacitor.

6. Piece of electrical equipment according to claim 4, wherein a MOSFET transistor is mounted between the battery and the input capacitor and is driven as a synchronous rectifier to form the switching member.

7. Piece of electrical equipment according to claim 3, wherein the switching member is connected to a circuit for control by slaving to a setpoint value representing the temperature threshold.

8. Piece of electrical equipment according to claim 7, wherein the control circuit is a pulse width modulation circuit having an output which forms a means for driving the switching member to the conductive state.

9. Battery (1) for carrying out the method of claim 1 comprising a short-circuiting member (4) adapted to be drivable in a ratio of a time-based cycle between a normal operating state of the battery and a short-circuiting state in which the battery is short-circuited, the short-circuiting member being connected to a detector which detects the temperature of the battery for the purpose of a change from the short-circuited state to the normal state of operation when the temperature of the battery is higher than a predetermined threshold, **characterised in that** the battery comprises a means of holding energy temporarily suitable for supplying a piece of electrical equipment connected to the battery when the short-circuiting member is in the short-circuiting state.

FIG.1

FIG.2

FIG.3

FIG.4

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2004063397 B
- US 6340879 B